# EUROPEAN PATENT APPLICATION

(11) **EP 4 387 228 A1**
(43) Date of publication of application: **19.06.2024**
(21) Application number: 22213694.7
(22) Date of filing: 15.12.2022
(51) Int. Cl.: H04N 19/48, H04N 19/40, H04N 19/503

(54) **METHOD AND DEVICE FOR COMBINING IMAGE DATA FROM TWO OR MORE ENCODED IMAGE FRAMES**

(71) Applicant: Axis AB, 223 69 Lund (SE)
(72) Inventor: EDPALM, VIktor, 223 69 LUND (SE); PERSSON, Anders, 223 69 LUND (SE)
(74) Representative: AWA Sweden AB

(57) **Abstract**

A device, a non-transitory computer-readable storage medium, and a method of combining image data from two or more encoded image frames is disclosed. The two or more encoded image frames are added to a new video stream and the two or more encoded image frames are indicated in the new video stream as non-display frames. Blocks of pixels of a new image frame are generated as skip blocks each referencing a respective block of pixels of one of the two or more encoded image frames from which respective block of pixels corresponding image data are copied. The skip blocks reference at least one block of pixels of each of the two or more encoded image frames. The new image frame is then added to the new video stream.

## Description

### Technical field

The present invention relates to adding encoded image frames to a video stream and more specifically to a method and a device for combining image data from two or more encoded image frames.

### Background

In the area of processing video streams to produce a new video stream there are some scenarios in which it is desirable to include image data from different video streams in the new video stream. For example, in a scenario where there are two video streams, one where objects such as persons and vehicles have been masked and one without the masking, it may be desirable to remove the masking of some objects and keep the masking on the rest of the objects, e.g. for integrity reasons. A new video stream would then have to be created where image data from both video streams are combined to achieve the removal of masking of only some objects. This requires video redaction which is cumbersome since it requires manual work. Video redaction also requires transcoding, i.e. first decoding of the two video streams, then combining decoded image data from the two decoded video streams into a new video stream and finally encoding the new video stream. Such transcoding takes time and processing power and requires both a video encoder and a video decoder.

### Summary of the invention

An object of the present invention is to is to solve or at least alleviate one or more of the drawbacks discussed above.

According to a first aspect, a method of combining image data from two or more encoded image frames is provided. The method comprises adding the two or more encoded image frames to a new video stream, and indicating, in the new video stream, the two or more encoded image frames as non-display frames. The method further comprises generating blocks of pixels of a new image frame as skip blocks each referencing a respective block of pixels of one of the two or more encoded image frames from which respective block of pixels corresponding image data are copied, wherein the skip blocks reference at least one block of pixels of each of the two or more encoded image frames, and adding the new image frame to the new video stream.

A non-display frame is a frame that by a decoder is identified as a frame that should not be displayed. In alternative such a frame may also be denoted a hidden frame or an auxiliary frame.

A skip block is a block for which no image information is sent to the decoder, only an indication that the block is a skip block. A skip block will by a decoder be identified to indicate that no additional information is provided.

A skip block referencing a block of pixels from which corresponding image data are copied, will by a decoder be identified to indicate that no additional information is provided and that instead image data from the block of pixels which the skip block references should be copied.

A block of pixels denotes a group of neighbouring pixels processed together during encoding. Blocks of pixels may also be denoted macroblocks, or coding tree units depending on the encoding format used.

By including the two encoded image frames as non-display frames and then generating block of pixels of a new image frame as skip blocks each referencing a respective block of pixels of one of the two or more encoded image frames from which respective block of pixels corresponding image data are copied, the image data of the respective blocks of pixels of the two or more encoded image frames which the skip blocks of the new image frame reference will be decoded and displayed. Furthermore, no decoding and encoding of the two or more encoded image frames is required to generate the new video stream.

The method of the first aspect may further comprise selecting image data from the two or more encoded image frames to be displayed in a single displayed frame of the new video stream, and identifying blocks of pixels of the two or more encoded image frames corresponding to the selected image data. In the act of generating, the skip blocks then reference the identified blocks of pixels of the two or more encoded image frames.

The skip blocks will thus reference the identified blocks of pixels of the two or more encoded image frames that correspond to the selected image data and the image data of the respective blocks of pixels of the two or more encoded image frames which the skip blocks of the new image frame reference will be decoded and displayed. Furthermore, no decoding and encoding of the two or more encoded image frames is required to generate the new video stream.

The two or more encoded image frames may be from the same encoded video stream. In alternative, the two or more encoded image frames may be from separate encoded video streams.

The two or more encoded image frames may consist of a first encoded image frame from a first encoded video stream and a second encoded image video frame from a second encoded video stream.

The first encoded image may be an encoded version of an image frame to which a privacy mask is applied to obscure an object in the image frame and the second encoded image frame may be an encoded version of the same image frames to which no privacy mask is applied.

The act of indicating may comprise setting a flag in a respective header of the two or more encoded image frames indicating the encoded image frame as a non-display frame.

According to a second aspect, a non-transitory computer-readable storage medium is provided having stored thereon instructions for implementing the method according to the first aspect when executed by a device having processing capabilities.

The above-mentioned optional features of the method according to the first aspect, when applicable, apply to the non-transitory computer-readable storage medium of the second aspect as well. To avoid undue repetition, reference is made to the above.

According to a third aspect, a device for of combining image data from two or more encoded image frames is provided. The device comprises circuitry configured to execute a first adding function configured to add the two or more encoded image frames to a new video stream, and an indicating function configured to indicate, in the new video stream, the two or more encoded image frames as non-display frames. The circuitry is further configured to execute a generating function configured to generate blocks of pixels of a new image frame as skip blocks each referencing a respective block of pixels of one of the two or more encoded image frames from which respective block of pixels corresponding image data are copied, wherein the skip blocks reference at least one block of pixels of each of the two or more encoded image frames, and a second adding function configured to add the new image frame to the new video stream.

The above-mentioned optional features of the method according to the first aspect, when applicable, apply to the device of the third aspect as well. To avoid undue repetition, reference is made to the above.

Hence, it is to be understood that this invention is not limited to the particular component parts of the system described or acts of the methods described as such system and method may vary. It is also to be understood that the terminology used herein is for purpose of describing particular embodiments only and is not intended to be limiting. It must be noted that, as used in the specification and the appended claim, the articles "a," "an," "the," and "said" are intended to mean that there are one or more of the elements unless the context clearly dictates otherwise. Furthermore, the words "comprising", "including", "containing" and similar wordings does not exclude other elements or steps.

### Brief description of the drawings

The above and other aspects of the present invention will now be described in more detail, with reference to appended figures. The figures should not be considered limiting but are instead used for explaining and understanding.
Figure 1 shows a block diagram in relation to embodiments of a device of the present disclosure.
Figure 2 shows a flow chart in relation to embodiments of a method of the present disclosure.
Figure 3 shows a schematic illustration of encoded image frames and references of a new video stream created according to the present disclosure.
Figure 4 shows a schematic illustration of a new image frame created according to the present disclosure.
Figure 5 shows a schematic illustration of encoded image frames and references of a new video stream created according to the present disclosure.
Figure 6 shows a schematic illustration of a new image frame created according to the present disclosure.
Figure 7 shows a schematic illustration of encoded image frames and references of a new video stream created according to the present disclosure.
Figure 8 shows a schematic illustration of a new image frame created according to the present disclosure.
Figure 9 shows a schematic illustration of encoded image frames and references of a new video stream created according to the present disclosure.
Figures 10-12 show schematic illustrations of new image frames created according to the present disclosure.

### Detailed description

The present invention will now be described hereinafter with reference to the accompanying drawings, in which currently preferred embodiments of the invention are illustrated. This invention may, however, be embodied in many different forms and should not be construed as limited to the embodiments set forth herein. In the drawings, boxes with dashed lines denote optional feature.

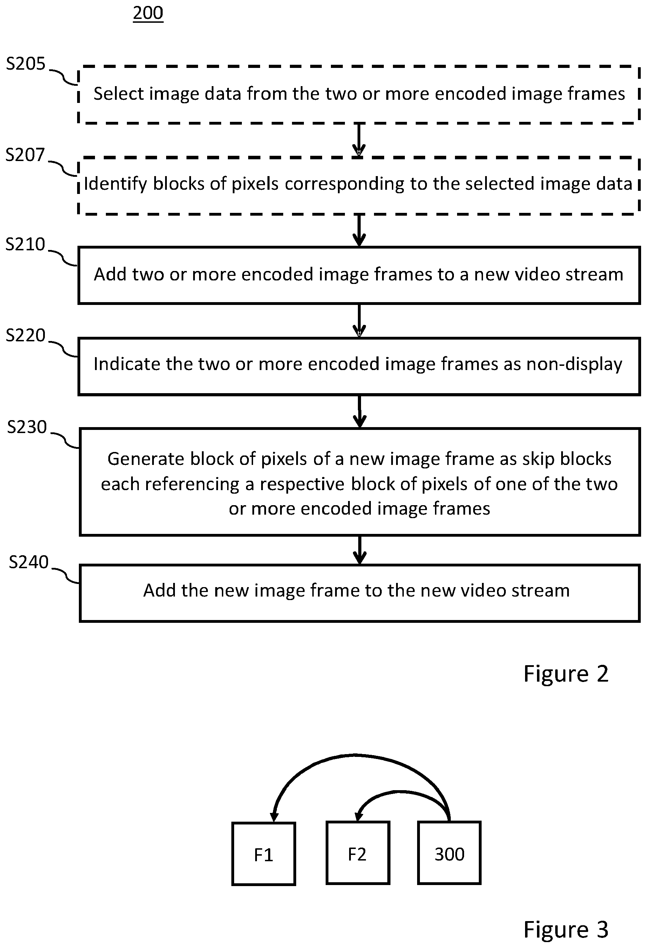

The present invention is applicable in scenarios in which image data from two or more encoded image frames should be combined and enables such combination without the need for transcoding of the two or more encoded image frames. The two or more encoded image frames may for example come from respective encoded video streams. One such scenario is where there are two encoded video streams, one where objects such as persons and vehicles have been masked and one without the masking. In such a scenario it may be desirable to remove the masking of some objects and keep the masking on the rest of the objects, e.g. for integrity reasons. For example, the video streams may originate from a surveillance camera and are to be used as evidence. In such a case some persons or vehicles which are relevant to an investigation may be shown without masking whereas the other persons and vehicles should preferably still be masked. Another scenario is where there are two or more encoded video streams each including a person participating in a video conference. In such a scenario it may be desirable to combine image data from the two or more encoded video streams such that the two or more persons all appear in each image frame of a single new video stream. The two or more encoded image frames may also be different encoded image frames from the same encoded video stream. One such scenario is where one or more moving objects appear in different portions in different encoded image frames relating to different points in time. In such a scenario it may be desirable to combine image data from the different image frames of the encoded video stream such that the one or more moving objects appear in the different portions of a single encoded image frame. Another such scenario is where intra refresh is used, i.e. where separate portions of image frames are intra encoded over a number of image frames. In such a scenario it may be desirable to combine image data from the respective intra encoded portions of the number of image frame into one new image frame. Further description in relation to these scenarios is provided in the description in relation to Figures 3-12.

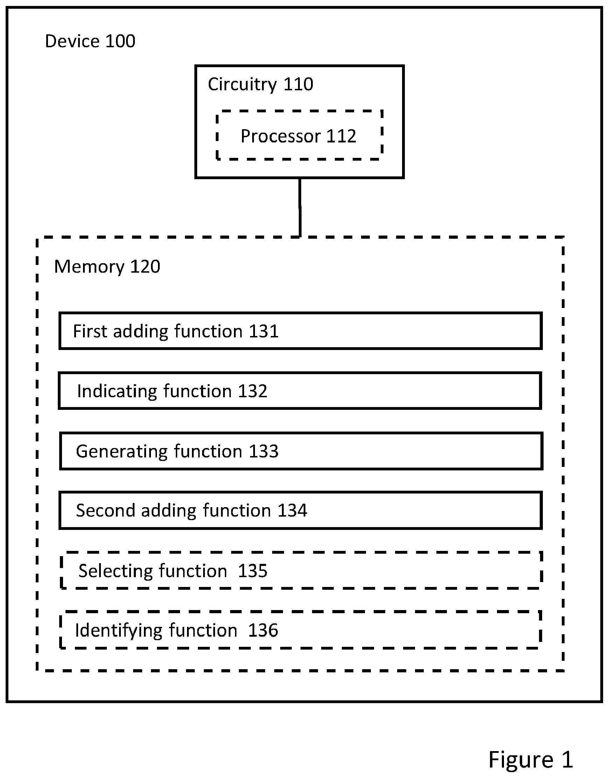

In the following, embodiments of a device 100 for combining image data from two or more encoded image frames will be discussed in the following with reference to Figure 1.

The two or more encoded image frames may come from two or more encoded video streams or from a single video stream. Some of the encoded image frames of the two or more encoded video streams may be encoded as intra frames or key frames and some of the images of the video stream as inter frames or delta frames. An intra frame is an encoded video frame that does not require information from other encoded video frames to be decoded. Hence, an intra frame is encoded based on information from the image frame of video data it is set to correspond to. Typically, similarities within the image frame are used to encode the image into an intra frame. In video encoding an intra frame is often referred to as an I-frame. The images of the video stream in between two intra frames are encoded as inter frames. Typically, an inter frame only comprises changes that occur from one frame to the next. Hence, inter frames are typically comprising less data than intra frames. In video encoding an inter frame is often referred to as a P-frame or a B-frame. P-frames refer to previous frames for data reference. Hence, the content of previous frames must be known in order to decode a P-frame. B-frames may refer to both previous and forward frames for data reference and may refer to more than one frame. Hence, the content of both the previous and forward frames must be known in order to decode a B-frame. When encoding an image into an inter frame, the image is divided into multiple groups of pixels. The groups of pixels are referred to as blocks of pixels herein but may also be referred to as macroblocks, or coding tree units etc. depending on the encoding format used. The image is compared to a reference image. For example, the reference image for encoding a P-frame is a previous image. A matching algorithm is used to identify matching groups of pixels between the image frame to be encoded and the reference frame and if a match is found for a group of neighbouring pixels, that group of pixels may be encoded as a motion vector specifying how the group of pixels has moved in the image frame since the reference frame. Determining motion vectors is sometimes referred to as motion estimation. If the movement is large due to fast movement of the camera or of objects in the captured scene, the motion estimation may fail in identifying motion vectors. The fewer motion vectors identified for an image frame to be encoded, the larger the resulting encoded inter frame will become in bit size and hence, the larger the contribution to the bitrate of the encoded video stream.

A block of pixels of an inter frame may be a skip block, which is a block of pixels for which no image information is sent to the decoder, only an indication that the block is a skip block. An inter frame including only skip blocks may be denoted a skip frame. Furthermore, if a skip block is said to reference a block of pixels from which corresponding image data are copied, this will by a decoder be identified to indicate that no additional information is provided and that instead, image data from the block of pixels that the skip block references should be copied. No information relating to residual error or motion vectors is provided in such a skip block, only the indication that the block is a skip block and a reference to block of pixels in another image frame. This in turn means that generation of such skip blocks does not require an encoder but can be done using software in a general-purpose computer if desired.

Skip blocks may for example be implemented using B-frames, such as for example B-frames according to the H.265 encoding standard. Other alternatives are available such as corresponding inter frames of the AV1 encoding standard.

The device 100 comprises a circuitry 110. The circuitry 110 is configured to carry out functions of the device 100. The circuitry 110 may include a processor 112, such as a central processing unit (CPU), microcontroller, or microprocessor. The processor 112 is configured to execute program code. The program code may for example be configured to carry out the functions of the device 100.

The device 100 may further comprise a memory 120. The memory 120 may be one or more of a buffer, a flash memory, a hard drive, a removable media, a volatile memory, a non-volatile memory, a random access memory (RAM), or another suitable device. In a typical arrangement, the memory 120 may include a non-volatile memory for long term data storage and a volatile memory that functions as system memory for the circuitry 110. The memory 120 may exchange data with the circuitry 110 over a data bus. Accompanying control lines and an address bus between the memory 120 and the circuitry 110 also may be present.

Functions of the device 100 may be embodied in the form of executable logic routines (e.g., lines of code, software programs, etc.) that are stored on a non-transitory computer readable medium (e.g., the memory 120) of the device 100 and are executed by the circuitry 110 (e.g., using the processor 112). Furthermore, the functions of the device 100 may be a stand-alone software application. The described functions may be considered a method that a processing unit, e.g. the processor 112 of the circuitry 110 is configured to carry out. Also, while the described functions may be implemented in software, such functionality may as well be carried out via dedicated hardware or firmware, or some combination of hardware, firmware and/or software.

The circuitry 110 is configured to execute a first adding function 131, an indicating function 132, a generating function 133, and a second adding function 134. The first adding function 131 is configured to add the two or more encoded image frames to a new video stream and the indicating function 133 is configured to indicate, in the new video stream, the two or more encoded image frames as non-display frames. The generating function 133 is configured to generate blocks of pixels of a new image frame as skip blocks each referencing a respective block of pixels of one of the two or more encoded image frames from which respective block of pixels corresponding image data are copied, wherein the skip blocks reference at least one block of pixels of each of the two or more encoded image frames. The second adding function 134 is configured to add the new image frame to the new video stream.

The circuitry 110 may further be configured to execute a selecting function 135 and an identifying function 136. The selecting function 135 is configured to select image data from the two or more encoded image frames to be displayed in a single displayed frame of the new video stream and the identifying function 136 is configured to identify blocks of pixels of the two or more encoded image frames corresponding to the selected image data. In the generating function 133, the skip blocks then reference the identified blocks of pixels of the two or more encoded image frames.

The two or more encoded image frames may be from the same encoded video stream or the two or more encoded image frames may be from separate encoded video streams.

The two or more encoded image frames may consist of a first encoded image frame from a first encoded video stream and a second encoded image video frame from a second encoded video stream.

The first encoded image frame may be an encoded version of an image frame to which a privacy mask is applied to obscure an object in the image frame and the second encoded image frame is an encoded version of the same image frames to which no privacy mask is applied.

The indicating function may be configured to set a flag in a respective header of the two or more encoded image frames indicating the encoded image frame as a non-display frame.

Further details regarding the functions the circuitry 110 is configured to execute will be provided in relation to the corresponding acts of a method 200 for combining image data from two or more encoded image frames which will be discussed in the following with reference to Figures 2-12.

The two or more encoded image frames may be from one encoded video stream. In such a case, the two or more encoded image frames may be different frames of the one encoded video stream, i.e. relating to different points in time.

In alternative, the two or more encoded image frames may be from separate encoded video streams. In such a case, the two or more encoded image frames may relate to the same point in time but from separate video streams. This is beneficial for example when the two or more video streams relate to the same original video stream which has been processed differently in the two or more video streams.

The two or more encoded image frames may consist of a first encoded image frame from a first encoded video stream and a second encoded image video frame from a second encoded video stream. For example, the first encoded image may be an encoded version of an image frame to which a privacy mask is applied to obscure an object in the image frame and the second encoded image frame may be an encoded version of the same image frame to which no privacy mask is applied.

The method 200 for combining image data from two or more encoded image frames comprises adding S210 the two or more encoded image frames to a new video stream. The two or more encoded image frames may be added in any order.

The two or more encoded image frames are indicated S220 as non-display frames in the new video stream. A non-display frame is a frame that by a decoder is identified as a frame that should not be displayed. In alternative such a frame may also be denoted a hidden frame. Indicating S220 the two or more encoded image frames as may include setting a flag in a respective header of the two or more encoded image frames indicating the encoded image frame as a non-display frame. Image data of the two or more encoded image frames may still be decoded by a decoder even if the two or more encoded image frames as such should not be displayed.

Blocks of pixels of a new image frame as skip blocks are further generated S230. Each skip block is generated to reference a respective block of pixels of one of the two or more encoded image frames. The reference indicates that corresponding image data are copied from the respective block of pixels of the two or more encoded image frames. Furthermore, the skip blocks reference at least one block of pixels of each of the two or more encoded image frames. Hence, the new image frame will include at least one but typically more than one skip block referencing each of the two or more encoded image frames.

As indicated hereinabove, a skip block is a block of pixels for which no image information is sent to the decoder, only an indication that the block is a skip block and a skip block referencing a block of pixels from which corresponding image data are copied will by a decoder be identified to indicate that no additional information is provided and that instead, image data from the block of pixels that the skip block references should be copied.

The new image frame is an inter frame that can include blocks of pixels (skip blocks) referencing blocks of pixels in different ones of the two or more encoded image frames. In coding formats which only allows an image frame to reference blocks of pixels of two different image frames, further new image frames will need to be generated.

The new image frame may be generated by generating each skip block one by one to reference a selected respective block of pixels in one of the two or more encoded image frames. In alternative, the new image frame may be generated by first generating all blocks of pixels of the new image frame as skip blocks referencing the corresponding blocks of pixels of one of the two or more encoded image frames and then selectively changing some of the skip blocks into referencing other ones of the two or more encoded image frames.

The new image frame comprising the generated skip blocks is then added S240 to the new video stream. The new image frame may be added before after or in between any of the two or more encoded image frames in the new video stream as long as this is feasible in the encoding format used. For example, some encoding formats only allows referencing blocks in image frames within a certain distance in the video stream, such as within four image frames in the video stream.

The method 200 may further comprise selecting S205 image data from the two or more encoded image frames to be displayed in a single displayed frame of the new video stream, and identifying S207 blocks of pixels of the two or more encoded image frames corresponding to the selected image data. The generated skip blocks will then reference the identified blocks of pixels of the two or more encoded image frames. The skip blocks will thus reference the identified blocks of pixels of the two or more encode image frames that correspond to the selected image data and the image data of the respective blocks of pixels of the two or more encoded image frames which the skip blocks of the new image frame reference will be decoded and displayed. Furthermore, no decoding and encoding of the two or more encoded image frames is required to generate the new video stream. The selecting may for example be performed by an operator selecting which image data of the respective one of the two or more encoded image frames should be displayed when the new video stream is decoded and displayed.

The method 200 relates to combining image data from two or more encoded image frames by generation of one new image frame. However, the method will typically be repeated a number of times to combine image data from further two or more encoded image frames, e.g. to combine image data for each encoded image frame of two or more video streams. For example, if image data is to be combined for image frames of two video streams, the method 200 may first be performed for the first encoded image frame of the first video stream and the first encoded image frame of the second video stream. Then the method 200 is performed for the second encoded image frame of the first video stream and the second encoded image frame of the second video stream, etc. When the method is repeated, the two or more encoded image frames and the new image frame from each repetition need not be added in any particular order as long as the encoding format used allows for the selected order of image frames.

Figure 3 shows a schematic illustration of image frames and references of a new video stream for a scenario where the two or more encoded image frames consists of a first encoded image frame F1 from a first encoded video stream and a second encoded image video frame F2 from a second encoded video stream. For example, the first encoded image frame F1 may be an encoded version of an image frame to which a privacy mask is applied to obscure an object in the image frame and the second encoded image frame F2 may be an encoded version of the same image frame to which no privacy mask is applied. The new image frame 300 will then include skip blocks referencing blocks of pixels of the first encoded image frame F1 and skip blocks referencing blocks of pixels of the second encoded image frame F2.

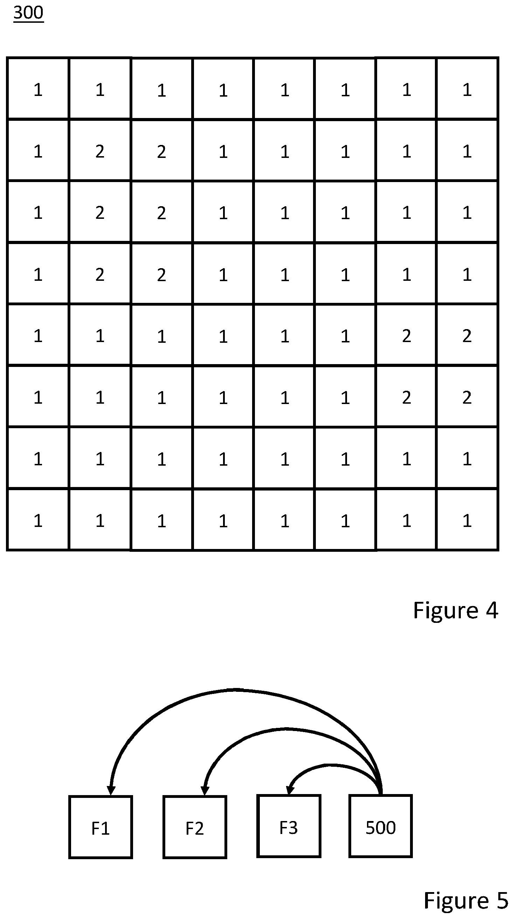

Figure 4 shows a schematic illustration of an example of the new image frame 300. Each square of the new image frame 300 is a skip block and the reference number in the square indicates which of the first encoded image frame F1 and the second encoded image frame F2 the block of pixels the skip block is referencing is located in, such that a reference number '1' indicates that the skip block is referencing a block of pixels in the first encoded image frame F1 and a reference number '2' indicates that the skip block is referencing a block of pixels in the second encoded image frame F2.

If the first encoded image frame F1 is an encoded version of an image frame to which a privacy mask is applied to obscure an object in the image frame and the second encoded image frame F2 is an encoded version of the same image frame to which no privacy mask is applied, an operator may select that image data from the second image frame F2 should be displayed in portions of the image frame where masking should not be applied, e.g. since objects in those portions are relevant for an investigation for which the two video streams are used as evidence. As shown in Figure 4, most skip blocks of the new image frame 300 (the ones including the reference number '1') reference blocks of pixels of the first encoded image frame F1 but some (the ones including the reference number '1') which relate to objects that are not to be obscured reference blocks of pixels of the second encoded image frame F2. Typically, the skip blocks of the new image frame will reference a corresponding block of pixels in one of the first encoded image frame F1 and the second encoded image frame F2. For example, the skip block in the upper left corner of the new image frame 300 would reference the skip block in the upper left corner of the first encoded image frame F1.

Figure 5 shows a schematic illustration of image frames and references of a new video stream for a scenario where the two or more encoded image frames consists of a first encoded image video frame F1, a second encoded image video frame F2, and a third encoded image video frame F3. The three encoded image frames may come from the same video stream or from three respective video streams. For example, the first encoded image frame F1 may be from a first video stream including a first person participating in a video conference, the second encoded image frame F2 may be from a second video stream including a second person participating in the video conference, and the third encoded image frame F3 may be from a third video stream including a third person participating in the video conference. The new image frame 300 will then include skip blocks referencing blocks of pixels of the first encoded image frame F1, skip blocks referencing blocks of pixels of the second encoded image frame F2, and skip blocks referencing blocks of pixels of the third encoded image frame F3.

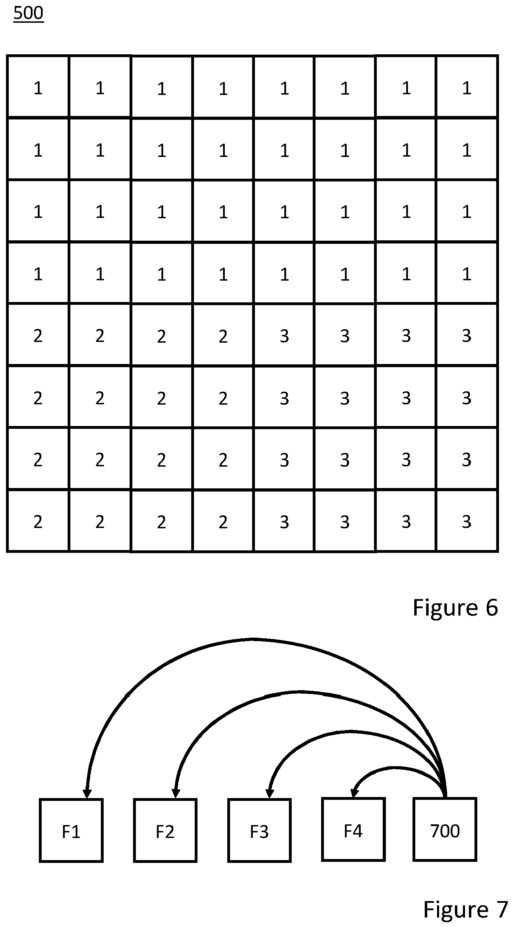

Figure 6 shows a schematic illustration of an example of the new image frame 500. Each square of the new image frame 500 is a skip block and the reference number in the square indicates which of the first encoded image frame F1, the second encoded image frame F2, and the third encoded image frame F3 the block of pixels the skip block is referencing is located in, such that a reference number '1' indicates that the skip block is referencing a block of pixels in the first encoded image frame F1, a reference number '2' indicates that the skip block is referencing a block of pixels in the second encoded image frame F2, and a reference number '3' indicates that the skip block is referencing a block of pixels in the third encoded image frame F3.

If the first encoded image frame F1 is from a first video stream including a first person participating in a video conference, the second encoded image frame F2 is from a second video stream including a second person participating in the video conference, and the third encoded image frame F3 is from a third video stream including a third person participating in the video conference, it may be desirable to combine image data from the encoded image frames in a new video stream such that each person is displayed at the same time. As shown in Figure 6, skip blocks in the upper half of the new image frame 500 (the ones including the reference number '1') reference blocks of pixels of the first encoded image frame F1, skip blocks in the lower left-hand quarter of the new image frame 500 (the ones including reference number '2') reference blocks of pixels of the second encoded image frame F2, and skip blocks in the lower right-hand quarter of the new image frame 500 (the ones including reference number '3') reference blocks of pixels of the third encoded image frame F3. For example, blocks of pixels referenced in each of the first, second and third encoded image frames may each correspond to a cropped version of the respective encoded image frame such that a representative portion of the frame is referenced in the new image frame and thus displayed after decoding. For example, such a portion may be the face of the respective one of the first, second and third persons participating in the video conference. In relation to Figure 6, this would correspond to the face of the first person being displayed in the upper half, the face of the second person being displayed in the lower left quarter, and the face of the third person being displayed in the lower left quarter after decoding and displaying the new video stream. As an alternative to using cropped versions of the respective encoded image frame, transformations of the respective encoded image frame can be used as disclosed in US Patent 10 616 592 B2 and US patent 10 898 418 B2 such that a scaled down version of the frame or a portion of the frame is referenced in the new image frame and thus displayed after decoding.

If the first encoded image frame F1, the second encoded image frame F2, and the third encoded image frame F3 are from a single video stream and relate to different points in time, it may be desirable to combine image data from the encoded image frames in a new video stream such that different portions of the three encoded image frames are shown at the same time. As shown in Figure 6, skip blocks in the upper half of the new image frame 500 (the ones including the reference number '1') reference blocks of pixels of the first encoded image frame F1, skip blocks in the lower left-hand quarter of the new image frame 500 (the ones including reference number '2') reference blocks of pixels of the second encoded image frame F2, and skip blocks in the lower right-hand quarter of the new image frame 500 (the ones including reference number '3') reference blocks of pixels of the third encoded image frame F3. For example, blocks of pixels referenced in each of the first, second and third encoded image frames of a respective portion of the respective encoded image frame such that the respective portions are referenced in the new image frame and thus displayed at the same time after decoding. For example, the same or different objects may appear in a respective portion of the respective one of the first, second and third encoded video frames, such as upper half, lower left-hand quarter, and lower right-hand quarter, respectively. In relation to Figure 6, this would correspond to the same object or the different objects being displayed in the upper half, the in the lower left-hand quarter, and in the lower right-hand quarter at the same time after decoding and displaying the new video stream. In this way, image data relating to same or different objects appearing in different portions of encoded image frames at different points in time in an encoded video stream may be combined by including encoded image frames relating to the different points in time as non-display frames in a new video stream and adding a new image frame including skip blocks referencing blocks of pixels corresponding portions of the encoded image frames corresponding to the different points in time.

Figure 7 shows a schematic illustration of image frames and references of a new video stream for a scenario where the two or more encoded image frames consists of a first encoded image frame F1, a second encoded image video frame F2, a third encoded image video frame F3, and a fourth encoded image video frame F4. The four encoded image frames may come from the same video stream or from four respective video streams. For example, the four encoded image frames may relate to encoded image frames where intra-refresh is performed such that a respective fourth of the blocks of pixels of each encoded frame are intra blocks and the remaining three fourths of the blocks of pixels are inter blocks. In such a case it may be desirable to combine image data corresponding to the intra blocks of the encoded image frames. The new image frame 700 will then include skip blocks referencing blocks of pixels of the first encoded image frame F1, skip blocks referencing blocks of pixels of the second encoded image frame F2, skip blocks referencing blocks of pixels of the third encoded image frame F3, and skip blocks referencing blocks of pixels of the fourth encoded image frame F4.

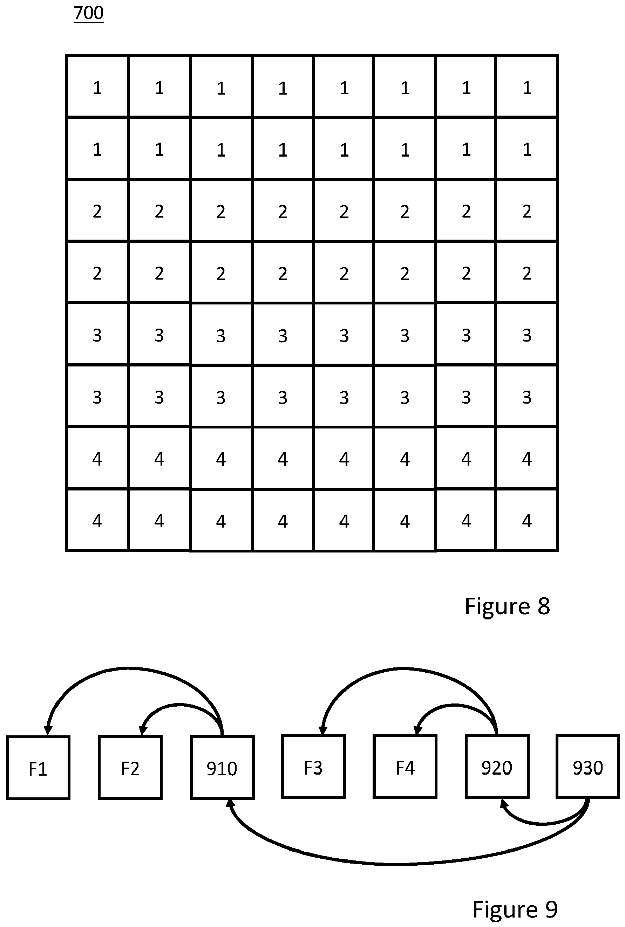

Figure 8 shows a schematic illustration of an example of the new image frame 700. Each square of the new image frame 700 is a skip block and the reference number in the square indicates which of the first encoded image frame F1, the second encoded image frame F2, the third encoded image frame F3, and the fourth encoded image frame F4 the block of pixels the skip block is referencing is located in, such that a reference number '1' indicates that the skip block is referencing a block of pixels in the first encoded image frame F1, a reference number '2' indicates that the skip block is referencing a block of pixels in the second encoded image frame F2, a reference number '3' indicates that the skip block is referencing a block of pixels in the third encoded image frame F3, and a reference number '4' indicates that the skip block is referencing a block of pixels in the third encoded image frame F4.

If the first encoded image frame F1, the second encoded image frame F2, the third encoded image frame F3, and the fourth encoded image frame F4 are from a single video stream and relate to different points in time and each include a separate fourth of intra blocks, it may be desirable to combine image data from the encoded image frames in a new video stream such that a new image frame will include skip blocks referencing only intra blocks of the four encoded image frames. For example, if the first encoded image frame F1 includes intra blocks in the first and second rows of blocks of pixels, the second encoded image frame F2 includes intra blocks in the third and fourth rows of blocks of pixels, the third encoded image frame F3 includes intra blocks in the fifth and sixth rows of blocks of pixels, and the fourth encoded image frame F4 includes intra blocks in the seventh and eight rows of blocks of pixels, these are the blocks of pixels that the skip blocks of the new image frame should reference. As shown in Figure 8, skip blocks in first and second row of blocks of pixels of the new image frame 500 (the ones including the reference number '1') reference blocks of pixels of the first encoded image frame F1, skip blocks in the third and fourth row of blocks of pixels of the new image frame 500 (the ones including reference number '2') reference blocks of pixels of the second encoded image frame F2, and skip blocks in the lower right-hand quarter of the new image frame 500 (the ones including reference number '3') reference blocks of pixels of the third encoded image frame F3. Hence, if corresponding blocks of pixels in the respective encoded image frame are referenced by the skip blocks of the new image frame, the skip blocks of the new image frame will reference only intra blocks.

In some encoding formats, inter frames such as the new image frame may only include skip blocks referencing blocks of pixels of one or two encoded image frames and not three or more image frames. In such a case referencing according to the description in relation to Figures 5 and 7 is not possible. Hence, as an alternative to the referencing in relation to Figure 7, referencing according to Figure 9 may be used. When image data should be combined from four encoded image frames F1-F4, a first new image frame 910 is generated according to the method 200 including skip blocks referencing blocks of pixels of the first two encoded image frames F1, F2, a second new image frame 920 is generated including skip blocks referencing blocks of pixels of the last two encoded image frames F3, F4, and a third new image frame 930 is generated including skip block referencing the skip blocks of the first new image frame 910 and the second new image frame 920. Both the first new image frame 910 and the second new image frame 920 should be indicated as non-display frames in the new video stream.

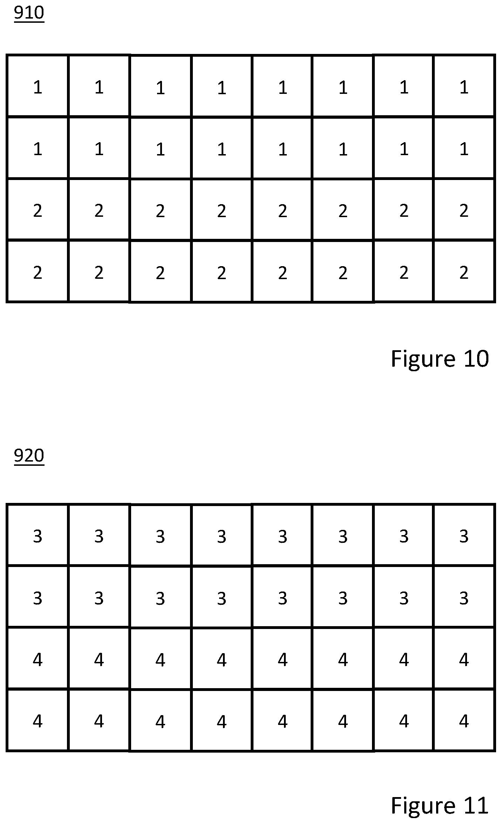

In relation to the scenario involving intra-refresh in four encoded image frames as described in relation to Figures 7 and 8 where the first encoded image frame F1 includes intra blocks in the first and second rows of blocks of pixels, the second encoded image frame F2 includes intra blocks in the third and fourth rows of blocks of pixels, the third encoded image frame F3 includes intra blocks in the fifth and sixth rows of blocks of pixels, and the fourth encoded image frame F4 includes intra blocks in the seventh and eight rows of blocks of pixels, these are the blocks of pixels that the skip blocks of the new image frame should reference. If each new image frame then may only reference at most two of the encoded image frames, the first new image frame 910, the second new image frame 920, the third new image frame 930 may be generated as disclosed in Figures 10-12.

Figure 10 shows a schematic illustration of an example of an upper half of the first new image frame 910. The blocks of pixels of the lower half of the first new image frame may be arbitrary since they will not be used. Each square is a skip block and the reference number in the square indicates which of the first encoded image frame F1, the second encoded image frame F2 the skip block is referencing is located in, such that a reference number'1' indicates that the skip block is referencing a block of pixels in the first encoded image frame F1, and a reference number '2' indicates that the skip block is referencing a block of pixels in the second encoded image frame F2. Specifically, the first and second rows reference corresponding blocks of pixels of the first encoded image frame F1, i.e. the intra blocks of that encoded image frame, and the third and fourth rows reference corresponding blocks of pixels of the second encoded image frame F2, i.e. the intra blocks of that encoded image frame.

Figure 11 shows a schematic illustration of an example of a lower half of the second new image frame 920. The blocks of pixels of the upper half of the first new image frame may be arbitrary since they will not be used. Each square is a skip block and the reference number in the square indicates which of the third encoded image frame F3, and the fourth encoded image frame F4 the block of pixels the skip block is referencing is located in, such that a reference number '3' indicates that the skip block is referencing a block of pixels in the third encoded image frame F3, and a reference number '4' indicates that the skip block is referencing a block of pixels in the third encoded image frame F4. Specifically, the fifth and sixth rows reference corresponding blocks of pixels of the third encoded image frame F3, i.e. the intra blocks of that encoded image frame, and the seventh and eighth rows reference corresponding blocks of pixels of the fourth encoded image frame F4, i.e. the intra blocks of that encoded image frame.

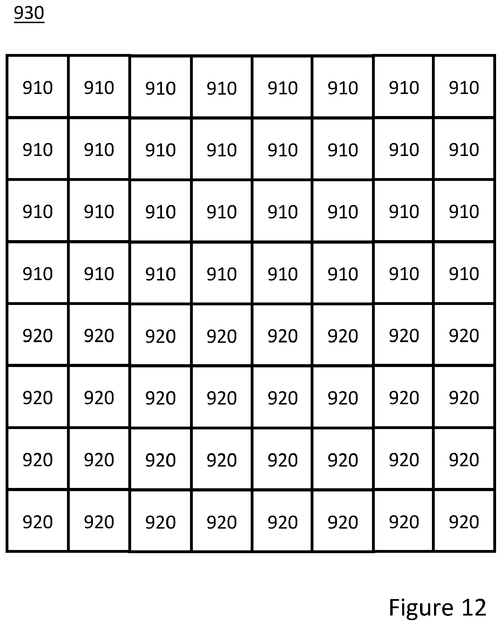

Figure 12 shows a schematic illustration of an example of the third new image frame 930. Each square is a skip block and the reference number in the square indicates which of the first new image frame 910, and the second new image frame 920 the block of pixels the skip block is referencing is located in, such that a reference number '910' indicates that the skip block is referencing a block of pixels in the first new image frame 910, and a reference number '920' indicates that the skip block is referencing a block of pixels in the second new image frame 920. Specifically, the skip blocks of the upper half of the third new image frame 930 reference corresponding blocks of pixels of the first new image frame 910, i.e. the skip blocks referencing intra blocks of the first and second encoded image frames F1, F2, and the skip blocks of the lower half of the third new image frame 930 reference corresponding blocks of pixels of the second new image frame 920, i.e. the skip blocks referencing intra blocks of the third and fourth encoded image frames F3, F4.

A person skilled in the art realizes that the present invention is not limited to the embodiments described above. On the contrary, many modifications and variations are possible within the scope of the appended claims. Such modifications and variations can be understood and effected by a skilled person in practicing the claimed invention, from a study of the drawings, the disclosure, and the appended claims.

## Claims

1. A method of combining image data from two or more encoded image frames, the method comprising:
adding (S2010) the two or more encoded image frames to a new video stream;
indicating (S220), in the new video stream, the two or more encoded image frames as non-display frames;
generating (S230) blocks of pixels of a new image frame as skip blocks each referencing a respective block of pixels of one of the two or more encoded image frames from which respective block of pixels corresponding image data are copied, wherein the skip blocks reference at least one block of pixels of each of the two or more encoded image frames; and
adding (S240) the new image frame to the new video stream.

2. The method according to claim 1, further comprising:
selecting (S205) image data from the two or more encoded image frames to be displayed in a single displayed frame of the new video stream;
identifying (S207) blocks of pixels of the two or more encoded image frames corresponding to the selected image data,
wherein, in the act of generating (S230), the skip blocks reference the identified blocks of pixels of the two or more encoded image frames.

3. The method according to claim 1 or 2, wherein the two or more encoded image frames are from the same encoded video stream.

4. The method according to claim 1 or 2, wherein the two or more encoded image frames are from separate encoded video streams.

5. The method according to claim 1 or 2, wherein the two or more encoded image frames consists of a first encoded image frame from a first encoded video stream and a second encoded image frame from a second encoded video stream.

6. The method according to claim 5, wherein the first encoded image frame is an encoded version of an image frame to which a privacy mask is applied to obscure an object in the image frame and the second encoded image frame is an encoded version of the same image frames to which no privacy mask is applied.

7. The method according to any one of the preceding claims, wherein the act of indicating comprises:
setting a flag in a respective header of the two or more encoded image frames indicating the encoded image frame as a non-display frame.

8. A non-transitory computer-readable storage medium having stored thereon instructions for implementing the method according to any one of claims 1 to 7 when executed by a device having processing capabilities.

9. A device (100) for combining image data from two or more encoded image frames, the device comprising circuitry (110) configured to execute:
a first adding function (131) configured to add the two or more encoded image frames to a new video stream;
an indicating function (132) configured to indicate, in the new video stream, the two or more encoded image frames as non-display frames;
a generating function (133) configured to generate blocks of pixels of a new image frame as skip blocks each referencing a respective block of pixels of one of the two or more encoded image frames from which respective block of pixels corresponding image data are copied, wherein the skip blocks reference at least one block of pixels of each of the two or more encoded image frames; and
a second adding function (134) configured to add the new image frame to the new video stream.

10. The device (100) according to claim 9, wherein the circuitry is further configured to execute:
a selecting function (135) configured to select image data from the two or more encoded image frames to be displayed in a single displayed frame of the new video stream;
an identifying function (136) configured to identify blocks of pixels of the two or more encoded image frames corresponding to the selected image data,
wherein, in the generating function (133), the skip blocks reference the identified blocks of pixels of the two or more encoded image frames.

11. The device (100) according to claim 9 or 10, wherein the two or more encoded image frames are from the same encoded video stream.

12. The device (100) according to claim 9 or 10, wherein the two or more encoded image frames are from separate encoded video streams.

13. The device (100) according to claim 9 or 10, wherein the two or more encoded image frames consists of a first encoded image frame from a first encoded video stream and a second encoded image frame from a second encoded video stream.

14. The device (100) according to claim 13, wherein the first encoded image frame is an encoded version of an image frame to which a privacy mask is applied to obscure an object in the image frame and the second encoded image frame is an encoded version of the same image frames to which no privacy mask is applied.

15. The device (100) according to any one of claims 9 to 14, wherein the indicating function is configured to set a flag in a respective header of the two or more encoded image frames indicating the encoded image frame as a non-display frame.
